# EUROPÄISCHE PATENTSCHRIFT

(11) **EP 1 829 732 B1**
(45) Veröffentlichungstag und Bekanntmachung des Hinweises auf die Patenterteilung: **12.10.2011**
(21) Anmeldenummer: 07002390.8
(22) Anmeldetag: 03.02.2007
(51) Int. Cl.: B60L 11/18, H02M 7/48, H02M 3/335

(54) **Flurförderzeug mit einem Ladegerät**
Industrial truck with a charging device
Chariots de manutention dotés d'un appareil de chargement

(30) Priorität: 01.03.2006 DE 102006009312
(43) Veröffentlichungstag der Anmeldung: 05.09.2007
(73) Patentinhaber: Jungheinrich Aktiengesellschaft, 22047 Hamburg (DE)
(72) Erfinder: Weber, Christoph, Dr.-Ing., 24558 Henstedt-Ulzburg (DE); Mänken, Frank, Dr.-Ing., 24558 Henstedt-Ulzburg (DE)
(74) Vertreter: Hauck Patent- und Rechtsanwälte

(56) Entgegenhaltungen:
- EP-A- 0 553 824
- EP-A- 0 715 389
- EP-A- 0 849 112
- JP-A- 2000 354 331
- US-A- 6 160 374

## Beschreibung

Die vorliegende Erfindung betrifft ein Flurförderzeug mit einem Ladegerät, einer Asynchronmaschine und einer Drehstromsteuerung, die eine Gleichspannung einer Batterie für die Asynchronmaschine wandelt.

Aus EP 1 350 664 A2 ist ein Flurförderzeug mit Ladefunktion bekannt, bei dem kein separates Ladegerät zum Wiederaufladen der Batterie vorgesehen ist, sondern ein elektronisches Steuergerät, das ebenfalls die Ladefunktion regelt. Hierzu ist ein separater Spannungswandler mit einem AC/DC-Wandler vorgesehen, der eine anliegende Netzspannung auf die niedrige Spannung der Batterie wandelt, wobei der AC/DC-Wandler einem vollständigen Ladegerät ohne Steuerplatine entspricht.

Aus EP 0 849 112 A1 ist eine Drehstromantriebsanordnung bekannt, mit einer Batterie gespeisten, drehzahlvariablen Drehstrommaschine und einem gesteuerten Pulswechselrichter, der die Drehstromwechselspannung für die Drehstrommaschine erzeugt. Ferner ist eine Aufladeeinrichtung für die Antriebsbatterie vorgesehen, die von einem Drehstromnetz gespeist, die Antriebsbatterie auflädt. Diese Anordnung benötigt einen aufwendig ausgelegten Motor.

Aus EP 0 593 472 B1 ist ein Bordladegerät bekannt, bei dem zwei Brückenzweige eines Wechselrichters als Hochsetzsteller geregelt werden, um eine Gleichspannung an einen Kondensator anzulegen, und der weitere Brückenzweig des Wechselrichters als Tiefsetzsteller geregelt wird, um aus dem Kondensator einen Ladestrom für die Fahrbatterie zu erzeugen.

JP 08 088 908 A beschreibt ein Ladegerät für ein elektrisches Schienenfahrzeug, bei dem sekundär seitlich eine vorgeschaltete Gleichrichtung durch zusätzliche Diodenhalbbrücken erfolgt.

Aus JP 08 214 413 A ist ein Ladegerät bekannt, bei dem ein Leistungsschütz zum Umschalten zwischen Drehstromsteuerung und Ladegerät vorgesehen ist.

Aus US 5,341,075 ist ein kombiniertes Antriebs- und Batterieladesystem bekannt, bei dem die anliegende Netzspannung nicht über einen Transformator gewandelt, sondern lediglich gefiltert wird.

Aus Patent Abstracts of Japan 2000 353431 sind zwei Schaltungsanordnungen zum Laden einer Batterie eines Fahrzeugantriebs mit einem Ladegerät, einer elektrischen Maschine und einer Drehstromsteuerung bekannt, bei der der Ladevorgang über einen 100 V-Anschluss oder einen 200 V-Anschluss erfolgen kann. Bei dem Ladevorgang über den 200 V-Anschluss ist ein Schaltnetzteil vorgesehen, das über einen Transformator mit einem Gleichrichter der Drechstromsteuerung verbunden ist, der den Ladestrom erzeugt. Bei dem Ladevorgang über den 100 V-Anschluss wird die Spannung über eine Induktivität in der Asynchronmaschine und eine Induktivität des Transformators hochgesetzt und an den Gleichrichter angelegt, um die Batterie zu laden.

Der Erfindung liegt die Aufgabe zugrunde, ein Flurförderzeug mit einem Ladegerät für die Fahrbatterie bereitzustellen, das mit einfachen Mitteln zuverlässig ein Wiederaufladen der Fahrbatterie erlaubt.

Die erfindungsgemäße Aufgabe wird durch ein Flurförderzeug mit den Merkmalen gemäß Anspruch 1 gelöst. Vorteilhafte Ausgestaltungen bilden die Gegenstände der Unteransprüche.

Das erfindungsgemäße Flurförderzeug besitzt ein Ladegerät, eine Asynchronmaschine und eine Drehstromsteuerung, die eine Gleichspannung einer Batterie für die Asynchronmaschine wandelt. Bei der erfindungsgemäßen Ausgestaltung ist für das Ladegerät ein Schaltnetzteil vorgesehen, das über einen Transformator mit der Drehstromsteuerung verbunden ist. Das Schaltnetzteil, die Drehstromsteuerung und der Transformator bilden einen Resonanzwandler, bevorzugt einen Serienresonanzwandler, der eine Netzspannung in eine Ladespannung für die Batterie umwandelt. Bei dem erfindungsgemäß vorgesehenen Resonanzwandler erfolgt gegenüber beispielsweise einem Durchflußwandler ein leistungsloses Schalten. Dies bietet eine Reihe von Vorteilen, so wird beispielsweise die EMV-Störaussendung reduziert. Darüber hinaus kommt es durch ein strom- oder spannungsloses Schalten zu deutlich verringerten Schaltverlusten, wodurch beispielsweise eine starke Erwärmung der Bauteile vermieden wird. Durch die geringe Wärmeentwicklung ist eine Kapselung möglich, die eine Isolierung nach IP54 schafft. Bei dem Ladegerät handelt es sich bevorzugt um ein Einbauladegerät, das mit dem Fahrzeugkörper und den elektrischen Anschlüssen verbunden ist.

Das Grundprinzip des Resonanzwandlers besteht darin, daß die insgesamt vorgesehene Resonanzdrossel(n) und/oder Resonanzkapazität(en) einen Schwingkreis bilden, der ein Schalten der Transistoren in den Nulldurchgängen von Strom oder Spannung erlaubt.

In einer bevorzugten Ausgestaltung ist bei dem Resonanzwandler ein Kondensator sekundärseitig, bevorzugt seriell zum Transformator vorgesehen. In einer bevorzugten Ausgestaltung ist auch eine Induktivität des Resonanzwandlers primärseitig in Serie mit dem Transformator vorgesehen.

Erfindungsgemäß schaltet der Resonanzwandler stromlos (Zero-Current-Switch-Wandler) oder spannungslos (Zero-Voltage-Switch-Wandler).

Ein Ausführungsbeispiel wird nachfolgend anhand der Figuren näher erläutert. Es zeigt
- Fig. 1: Strom- und Spannungsverlauf an einem Resonanzwandler,
- Fig. 2 und 3: einen Resonanzwandler mit sekundärseitig angeordneter Resonanzkapazität.

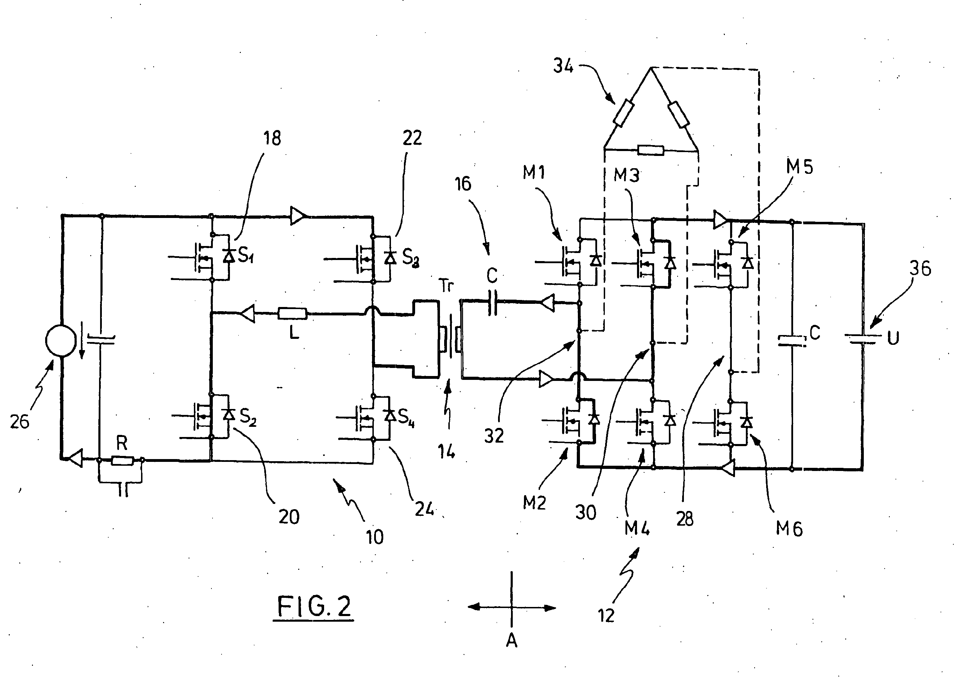

Figur 2 zeigt den grundlegenden Aufbau eines Resonanzwandlers. Das Schaltnetzteil 10 befindet sich links einer Trennlinie A. Die bereits in Flurförderzeugen vorhandene Drehstromsteuerung 12 befindet sich rechts der Trennlinie A. Das Schaltnetzteil 10 besitzt einen Transformator 14, der sekundärseitig mit einem Kondensator 16 an einem Ausgang verbunden ist. Ferner sind in dem Schaltnetzteil 4 Stromrichterventile 18, 20, 22, 24 vorgesehen. Die Stromrichterventile sind zu einer Brücke angeordnet, deren Diagonalanschlüsse mit dem Transformator 14 verbunden sind. Der Netzanschluß 26 ist für eine Wechselspannung eingezeichnet. Sekundärseitig besitzt die Drehstromsteuerung einen Wechselrichter mit 3 Brückenzweigen 28, 30, 32, die identisch aufgebaut sind. Jeder der Brückenzweige besitzt zwei Stromrichterventile, die insgesamt als M1 bis M6 bezeichnet sind. Bei den Stromrichterventilen handelt es sich um schaltbare Leistungshalbleiter, wie beispielsweise MOSFET-Transistoren mit Freilaufdiode oder Insulated Gate Bipolar-Transistoren (IGBTs) mit interner Freilaufdiode.

Jeweils zwischen den Stromrichterventilen in den einzelnen Ästen 28, 30 und 32 ist ein Anschluß einer Asynchronmaschine 34 vorgesehen. Die Steuerung für den Umrichter ist in Figur 2 nicht dargestellt. Gespeist wird der Umrichter im regulären Fahrbetrieb von einer Batterie 36.

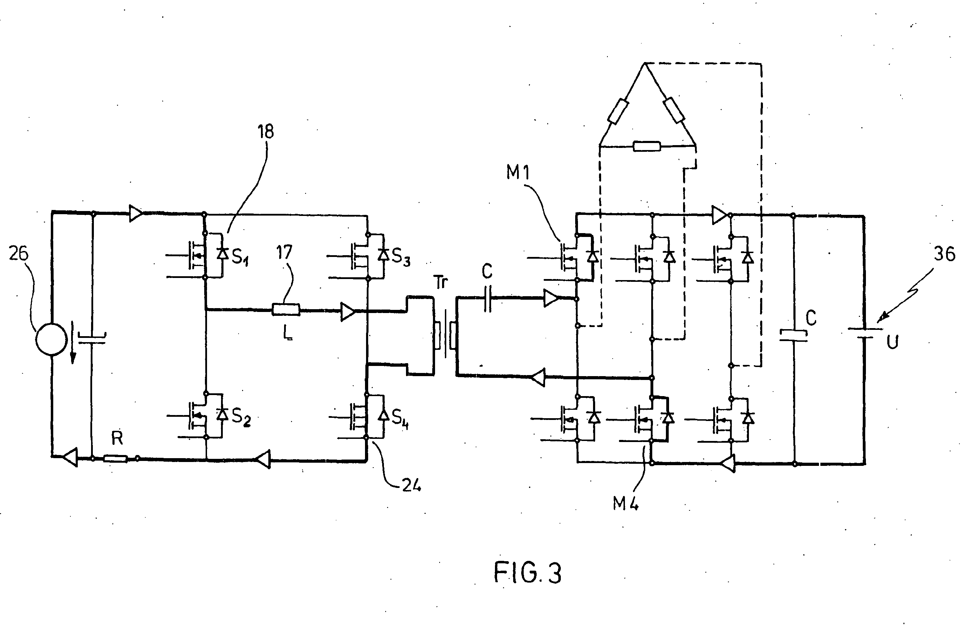

In dem in Figur 2 dargestellten Schaltzustand fließt der Strom im Schaltnetzteil 10 über die Stromrichterventile 22 und 20. Sekundärseitig läuft der Strom über die Stromrichterventile M2 und M3. In Figur 3 ist die gleiche Schaltung dargestellt, bei der sich bei gleichbleibender Stromrichtung am Netz die primärseitige Stromrichtung an dem Transformator 14 geändert und die Stromrichtung durch die Drehstromsteuerung nicht geändert haben. In diesem Zustand fließt primärseitig der Strom über die Stromrichterventile 18 und 24 und sekundärseitig über M1 und M4. Deutlich wird hierbei, daß während sich die primärseitige Stromrichtung geändert hat, sekundärseitig keine Änderungen des Stroms vorliegt. Die Ansteuerung des Resonanzwandlers insbesondere die Steuerung der Schaltperioden führen zu Strömen unterschiedlicher Ausgangsstärke, so daß eine Steuerung des Ladestroms möglich ist. Alternativ kann der Ladestrom auch durch Variation der Eingangsspannungsquelle 26 gesteuert werden.

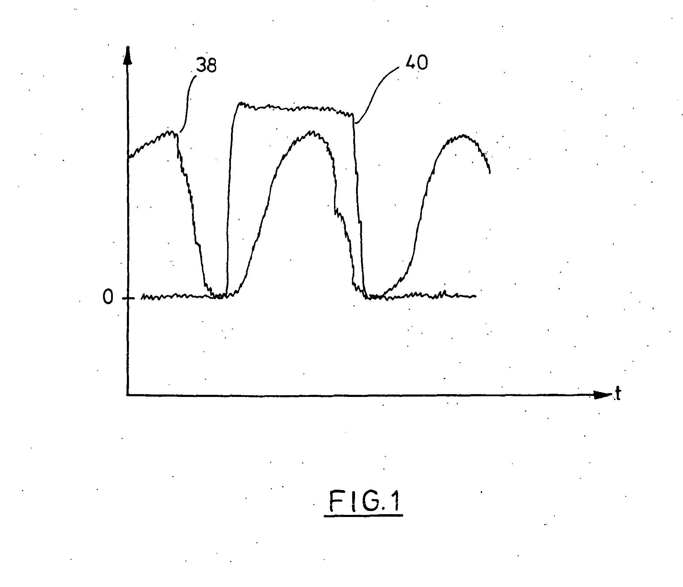

Figur 1 zeigt beispielhaft den Verlauf des primärseitigen Stroms, der im Nulldurchgang geschaltet wird und damit sekundärseitig den für eines der Stromrichterventile dargestellten Gleichspannungsverlauf 40 ergibt. Bei Ladeleistungen von einigen 100 Watt ergibt sich durch den Einsatz des Resonanzwandlers eine geringe Wärmebildung auch bei Dauerbetrieb sowie eine gute elektromagnetische Verträglichkeit.

## Patentansprüche

1. Flurförderzeug mit einem Ladegerät (10), einer Asynchronmaschine (34) und einer Drehstromsteuerung (12), die eine Gleichspannung einer Batterie (36) für die Asynchronmaschine (34) wandelt,
wobei
das Ladegerät ein Schaltnetzteil (10) aufweist, das über einen Transformator (14) mit der Drehstromseite der Drehstromsteuerung (12) verbunden ist, wobei das Schaltnetzteil (10), die Drehstromsteuerung (12) und der Transformator (14) einen Resonanzwandler bilden, der eine Netzspannung in eine Ladespannung für die Batterie umwandelt und ausgelegt ist, um in einem Nulldurchgang von Strom oder Spannung zu schalten.

2. Flurförderzeug nach Anspruch 1, **dadurch gekennzeichnet, daß** der Resonanzwandler als Serienresonanzwandler ausgebildet ist.

3. Flurförderzeug nach Anspruch 1 oder 2, **dadurch gekennzeichnet, daß** der Resonanzwandler einen Kondensator sekundärseitig aufweist.

4. Flurförderzeug nach Anspruch 2, **dadurch gekennzeichnet, daß** der Kondensator (16) in Serie zum Transformator geschaltet ist.

5. Flurförderzeug nach einem der Ansprüche 1 bis 4, **dadurch gekennzeichnet, daß** der Resonanzwandler eine primärseitige Induktivität (17) aufweist.

6. Flurförderzeug nach einem der Ansprüche 1 bis 5, **dadurch gekennzeichnet, daß** der Schwingkreis sekundärseitig angeordnet ist.

## Claims

1. Industrial truck with a charger (10), an asynchronous machine (34) and a three-phase AC control unit (12) which converts a DC voltage of a battery (36) for the asynchronous machine (34), wherein the charger comprises a switching power supply (10) which is connected to the three-phase AC side of the three-phase AC control unit (12) via a transformer (14), wherein the switching power supply (10), the three-phase AC control unit (12) and the transformer (14) forming a resonant converter, which converts a mains voltage into a charging voltage for the battery and is designed for switching at a zero crossing of current or voltage.

2. Industrial truck according to Claim 1, **characterized in that** the resonant converter is configured as a series resonant converter.

3. Charger according to Claim 1 or 2, **characterized in that** the resonant converter has a capacitor on the secondary side.

4. Charger according to Claim 2, **characterized in that** the capacitor (16) is switched in series with the transformer.

5. Industrial truck according to one of Claims 1 to 4, **characterized in that** the resonant converter has an inductor (17) on the primary side.

6. Industrial truck according to one of Claims 1 to 5, **characterized in that** the resonant circuit is arranged on the secondary side.

## Revendications

1. Chariot de manutention doté d'un appareil de chargement (10), d'une machine asynchrone (34) et d'une commande de courant triphasé (12) qui convertit une tension continue d'une batterie (36) pour la machine asynchrone (34),
l'appareil de chargement comprenant une alimentation de réseau de distribution (10) qui est reliée à la face de courant triphasé de la commande de courant triphasé (12) via un transformateur (14), l'alimentation de réseau de distribution (10), la commande de courant triphasé (12) et le transformateur (14) formant un convertisseur de résonance qui convertit une tension de réseau en une tension de charge pour la batterie et est conçu pour commuter dans un passage au point zéro du courant ou de la tension.

2. Chariot de manutention selon la revendication 1, **caractérisé en ce que** le convertisseur de résonance est conçu comme un convertisseur de résonance série.

3. Chariot de manutention selon les revendications 1 ou 2, **caractérisé en ce que** le convertisseur de résonance comporte un condensateur côté secondaire.

4. Chariot de manutention selon la revendication 2, **caractérisé en ce que** le condensateur (16) est commuté en série vers le transformateur.

5. Chariot de manutention selon une des revendications 1 à 4, **caractérisé en ce que** le convertisseur de résonance présente une inductance primaire (17).

6. Chariot de manutention selon une des revendications 1 à 5, **caractérisé en ce que** le circuit oscillant est placé côté secondaire.
